# FASCICULE DE BREVET EUROPEEN

(11) **EP 0 743 237 B1**
(45) Date de publication et mention de la délivrance du brevet: **08.07.1998**
(21) Numéro de dépôt: 96400812.2
(22) Date de dépôt: 16.04.1996
(51) Int. Cl.: B62D 21/02

(54) **Agencement d'un train de roues avant sur une caisse de véhicule**
Vorderes Fahrgestell an der Karosserie eines Kraftfahrzeuges
Fore-axle assembly on vehicle body

(30) Priorité: 15.05.1995 FR 9505717
(43) Date de publication de la demande: 20.11.1996
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, 95110 Sannois (FR)
(74) Mandataire: Moncheny, Michel

(56) Documents cités:
- EP-A- 0 009 975
- DE-A- 1 405 211
- PATENT ABSTRACTS OF JAPAN vol. 016, no. 405 (M-1301), 26 Août 1992 & JP-A-04 135921 (MAZDA MOTOR CORP), 11 Mai 1992,
- PATENT ABSTRACTS OF JAPAN vol. 014, no. 010 (M-917), 10 Janvier 1989 & JP-A-01 257613 (ISUZU MOTORS LTD), 13 Octobre 1989,

## Description

La présente invention concerne un agencement d'un train de roues avant sur une caisse de véhicule.

On connaît déjà dans l'état de la technique un agencement d'un train de roues avant sur une caisse de véhicule, cette caisse comprenant un soubassement délimité par un plancher dans lequel est ménagé un tunnel sensiblement longitudinal ouvert vers le bas, muni d'une extrémité débouchant à l'avant du plancher entre deux brancards prolongeant le plancher, l'agencement étant du type dans lequel chaque roue du train est reliée par un bras d'articulation sensiblement transversal par rapport à la direction longitudinale du véhicule à une extrémité correspondante d'un berceau fixé sur le soubassement (voir DE-A-1405211).

Le berceau confère aux articulations des bras d'articulation du train la rigidité transversale nécessaire au bon fonctionnement de ce train.

L'invention a pour but de proposer un berceau simple optimisant la rigidité de la caisse du véhicule.

A cet effet, l'invention a pour objet un agencement d'un train de roues avant sur une caisse de véhicule, du type précité, caractérisé en ce que le berceau comprend une partie centrale transversale par rapport à la direction longitudinale du véhicule, fixée sur le plancher de manière à former un pont fermant le contour de l'extrémité débouchante du tunnel, et deux parties d'extrémités inclinées de façon divergente vers l'avant du véhicule, fixées sur les brancards.

Suivant d'autres caractéristiques de l'invention:
- le berceau a une forme générale en caisson aplati et comporte un corps allongé de section transversale en forme générale de U dont le côté ouvert est obturé par une plaque formant semelle, de manière que les bords de jonction du corps et de la semelle fassent saillie perpendiculairement aux ailes du corps ;
- les bras d'articulation sont reliés aux extrémités du berceau par des montages en chapes ;
- les montages en chapes matérialisent des axes d'articulation sensiblement verticaux, et les ailes des chapes sont délimitées par un bord saillant de la semelle et par des flasques fixés sur les extrémités de l'âme du corps du berceau ;
- le berceau s'étend sensiblement parallèlement à un plan horizontal ;
- les extrémités avant des brancards sont surélevées par rapport au plancher, et les parties d'extrémités du berceau sont reliées aux extrémités avant des brancards par l'intermédiaire d'organes d'entretoisement verticaux s'étendant entre les brancards et un plan sensiblement horizontal de jonction de la partie centrale du berceau avec le soubassement ;
- le tunnel débouche dans un compartiment avant du véhicule à travers un tablier séparant ce compartiment de l'habitacle du véhicule, et la partie centrale du berceau est fixée sur le plancher par l'intermédiaire de deux organes d'entretoisement transversaux, en forme générale de caissons, s'étendant de part et d'autre du tunnel entre ce dernier et les brancards et sensiblement dans le prolongement du plancher et du tablier ;
- le berceau forme un support pour un équipement agencé dans la partie avant du véhicule, notamment un ensemble de crémaillère de direction.

Les avantages de l'invention apparaîtront à la lecture de la description qui va suivre, donnée uniquement à titre d'exemple, pour la compréhension de laquelle on se réfèrera aux dessins annexés, dans lesquels :
- la figure 1 est une vue schématique de la partie avant d'un véhicule automobile, en coupe suivant le plan vertical longitudinal médian de ce véhicule, dans laquelle est agencé, selon l'invention, un train de roues avant ;
- la figure 2 est une vue de dessous du véhicule de la figure 1 ;
- la figure 3 est une vue en perspective éclatée du train avant de la figure 1, le tunnel étant coupé suivant le plan vertical longitudinal médian du véhicule.

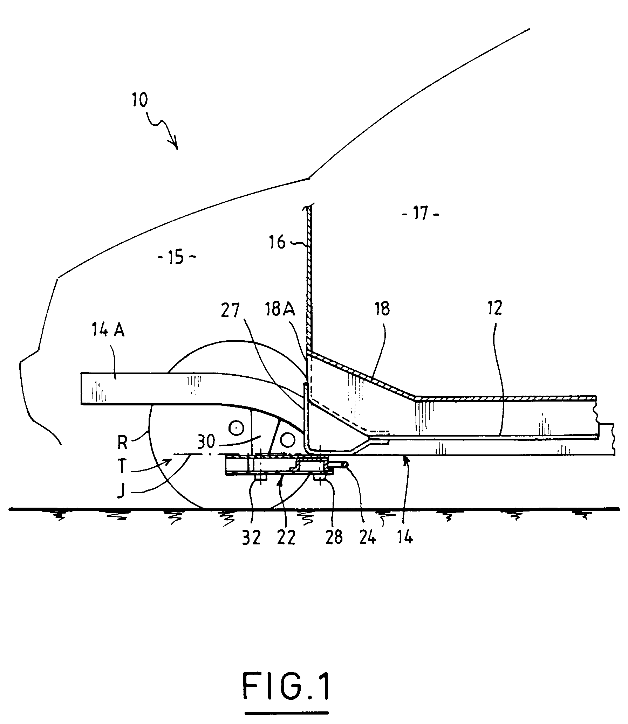

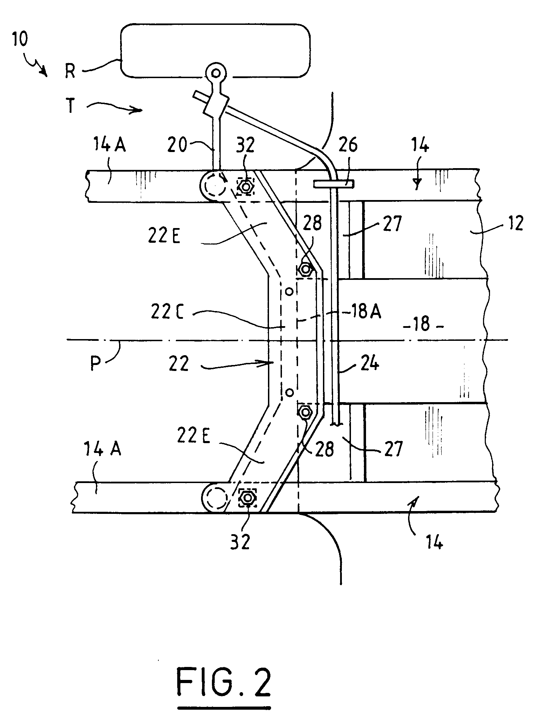

On a représenté sur les figures 1 et 2 la partie avant d'un véhicule automobile 10 dans laquelle est agencé, selon l'invention, un train T de roues avant. Pour des raisons de clarté, on a représenté une seule roue R de ce train.

Sur ces figures, on reconnaît différents éléments classiques du soubassement de la caisse du véhicule, à savoir : un plancher 12, deux longerons ou brancards 14 s'étendant partiellement sous le plancher 12 et munis d'extrémités avant 14A prolongeant la partie avant du plancher 12, un tablier 16 séparant un compartiment avant 15 du véhicule de l'habitacle 17 du véhicule et un tunnel longitudinal 18 ménagé dans le plancher 12, formant un passage pour des équipements classiques, par exemple une tubulure d'échappement.

Les extrémités avant 14A des brancards sont surélevées par rapport au plancher 12.

Le tunnel 18 est ouvert vers le bas sur toute sa longueur et comporte une extrémité 18A débouchant dans le compartiment 15, entre les extrémités avant 14A des brancards et à travers le tablier 16. Le plan vertical longitudinal médian P du véhicule forme un plan de symétrie du tunnel 18.

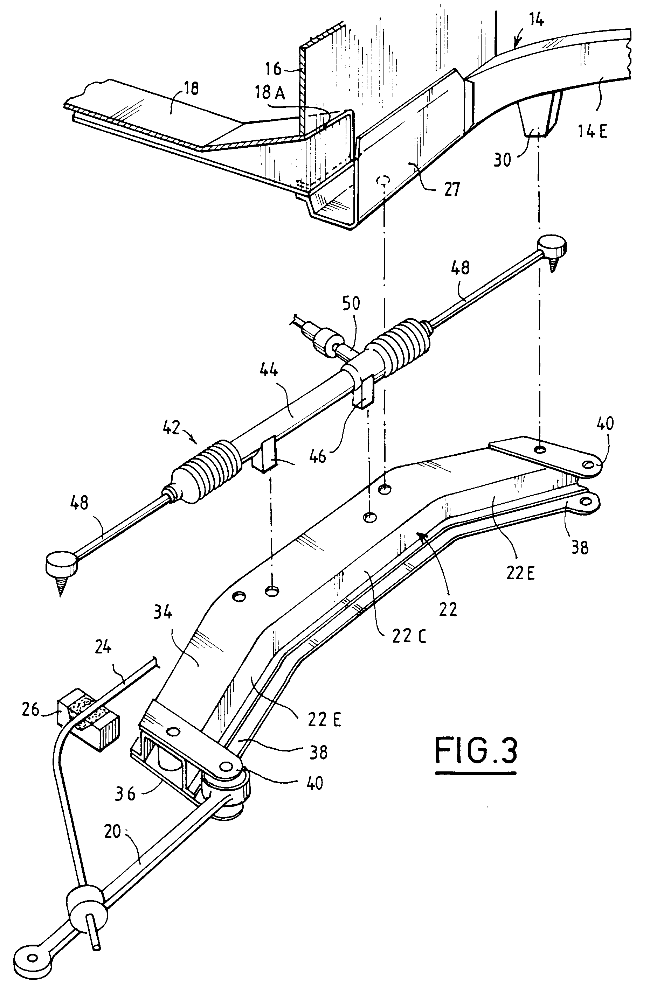

Le train T est par exemple du type MAC-PHERSON. Chaque roue R est portée par un pivot, non représenté sur les figures, relié par un bras d'articulation 20 à un berceau transversal 22, montré plus en détail à la figure 3, fixé au plancher 12 et aux extrémités avant 14A des brancards.

Chaque bras d'articulation 20 est relié de façon connue en soi à une extrémité correspondante d'une barre anti-roulis 24 portée par une paire de paliers élastiques 26 fixés de façon connue en soi sous les brancards 14.

La barre antiroulis 24 absorbe les efforts longitudinaux subis par le train T.

Le berceau 22 a une forme générale en caisson aplati et s'étend sous le plancher 12 sensiblement parallèlement à un plan horizontal.

Le berceau 22 comporte une partie centrale 22C transversale par rapport à la direction longitudinale du véhicule, fixée sous le plancher 12 par l'intermédiaire de deux organes d'entretoisement transversaux 27, en forme générale de caissons, disposés de part et d'autre du tunnel 18, entre celui-ci et les brancards.

Les organes d'entretoisement transversaux 27 sont fixés de façon connue en soi sur le soubassement de la caisse du véhicule de manière à s'étendre sensiblement dans le prolongement du plancher 12 et du tablier 16.

Le berceau 22 est fixé de façon connue en soi aux organes d'entretoisement transversaux 27 par des vis 28.

Le berceau 22 comporte de plus deux parties d'extrémités 22E inclinées de façon divergente vers l'avant du véhicule, fixées aux extrémités avant 14A des brancards par l'intermédiaire d'organes d'entretoisement verticaux 30 s'étendant entre les brancards et le plan J sensiblement horizontal de jonction de la partie centrale 22C du berceau avec les organes d'entretoisement transversaux 27.

Les extrémités supérieures des organes d'entretoisement verticaux 30 sont fixées de façon connue en soi aux extrémités avant 14A des brancards, par exemple par soudage. Les parties d'extrémités 22E du berceau sont fixées de façon connue en soi sur les extrémités inférieures des organes d'entretoisement verticaux 30 par des vis 32.

La partie centrale 22C du berceau forme un pont fermant le contour de l'extrémité débouchante 18A du tunnel. Cette partie 22C du berceau rigidifie transversalement la partie avant du véhicule en palliant l'effet de discontinuité transversale de la caisse dû au tunnel 18.

Les parties d'extrémités inclinées 22E du berceau participent également à la rigidification transversale de la partie avant du véhicule par effet de triangulation. En effet, ces parties inclinées 22E transmettent les efforts transversaux appliqués aux roues vers l'avant du plancher qui est renforcé par la partie centrale 22C.

En se référant à la figure 3, on voit que le berceau 22 comporte un corps allongé supérieur 34 de section transversale en forme générale de U, délimitant la partie centrale 22C et les parties d'extrémités 22E du berceau. Le côté ouvert du corps 34 est obturé par une plaque formant semelle inférieure 36 fixée de façon connue en soi sur le corps 34. Les bords de jonction du corps 34 et de la semelle 36 font saillie perpendiculairement aux ailes du corps 34.

Chaque bras d'articulation 20 est relié aux extrémités du berceau 22 par un montage en chape. De préférence, comme illustré sur les figures, les ailes de la chape sont délimitées par un bord de jonction saillant 38 de la semelle 36 et par un flasque 40 fixé de façon connue en soi, par exemple par soudage, sur une extrémité correspondante de l'âme ou dessus du corps 34.

Les montages en chape illustrés sur les figures matérialisent des axes d'articulation sensiblement verticaux.

En variante, les montages en chape peuvent être orientés de manière à matérialiser des axes d'articulation sensiblement horizontaux.

Le berceau 22 peut avantageusement former un support pour un équipement agencé dans la partie avant du véhicule, notamment un ensemble 42 de crémaillère de direction, comme cela est représenté sur la figure 3. Sur cette figure, on reconnaît en effet un boîtier 44 de crémaillère muni de pattes 46 de fixation sur le dessus du berceau, des bielles de connexion 48 reliant la crémaillère aux roues du train T et une partie 50 du boîtier contenant un pignon d'extrémité de colonne de direction engrenant avec la crémaillère.

L'invention ne se limite pas au mode de réalisation illustré sur les figures.

En particulier, le train avant n'est pas nécessairement du type MAC-PHERSON et peut être notamment du type pseudo MAC-PHERSON ou à double triangle. Les bras 20 d'articulation des roues peuvent être remplacés par des triangles d'articulation. Dans ce cas, l'articulation avant de chaque triangle est portée par une extrémité du berceau et l'articulation arrière du triangle est portée par le plancher ou un brancard s'étendant sous ce plancher.

L'invention comporte de nombreux avantages.

En particulier, le berceau agencé selon l'invention a une forme générale plane qui permet sa fabrication par des opérations simples d'emboutissage et d'assemblage de tôles.

De plus, le berceau agencé selon l'invention rigidifie efficacement dans une direction transversale le train avant et la partie avant de la caisse du véhicule.

## Revendications

1. Agencement d'un train de roues avant sur une caisse de véhicule, cette caisse comprenant un soubassement délimité par un plancher (12) dans lequel est ménagé un tunnel (18) sensiblement longitudinal ouvert vers le bas, muni d'une extrémité débouchant à l'avant du plancher entre deux brancards (14) prolongeant le plancher (12), l'agencement étant du type dans lequel chaque roue (R) du train est reliée par un bras d'articulation (20) sensiblement transversal par rapport à la direction longitudinale du véhicule à une extrémité correspondante d'un berceau (22) fixé sur le soubassement, caractérisé en ce que le berceau (22) comprend une partie centrale (22C) transversale par rapport à la direction longitudinale du véhicule, fixée sur le plancher (12) de manière à former un pont fermant le contour de l'extrémité débouchante (18A) du tunnel, et deux parties d'extrémités (22E) inclinées de façon divergente vers l'avant du véhicule, fixées sur les brancards (14).

2. Agencement selon la revendication 1, caractérisé en ce que le berceau (22) a une forme générale en caisson aplati et comporte un corps allongé (34) de section transversale en forme générale de U dont le côté ouvert est obturé par une plaque formant semelle (36), de manière que les bords de jonction du corps (34) et de la semelle (36) fassent saillie perpendiculairement aux ailes du corps (34).

3. Agencement selon la revendication 1 ou 2, caractérisé en ce que les bras d'articulation (20) sont reliés aux extrémités du berceau (22) par des montages en chapes.

4. Agencement selon les revendications 2 et 3 prises ensemble, caractérisé en ce que les montages en chapes matérialisent des axes d'articulation sensiblement verticaux, et en ce que les ailes des chapes sont délimitées par un bord saillant (38) de la semelle et par des flasques (40) fixés sur les extrémités de l'âme du corps (34) du berceau.

5. Agencement selon l'une quelconque des revendications précédentes, caractérisé en ce que le berceau (22) s'étend sensiblement parallèlement à un plan horizontal.

6. Agencement selon la revendication 5, caractérisé en ce que les extrémités avant (14A) des brancards sont surélevées par rapport au plancher (12), et en ce que les parties d'extrémités (22E) du berceau sont reliées aux extrémités avant (14A) des brancards par l'intermédiaire d'organes d'entretoisement verticaux (30) s'étendant entre les brancards et un plan (J) sensiblement horizontal de jonction de la partie centrale (22C) du berceau avec le soubassement.

7. Agencement selon l'une quelconque des revendications précédentes, caractérisé en ce que le tunnel (18) débouche dans un compartiment avant (15) du véhicule à travers un tablier (16) séparant ce compartiment de l'habitacle (17) du véhicule, et en ce que la partie centrale (22C) du berceau est fixée sur le plancher (12) par l'intermédiaire de deux organes d'entretoisement transversaux (27), en forme générale de caissons, s'étendant de part et d'autre du tunnel entre ce dernier et les brancards (14) et sensiblement dans le prolongement du plancher (12) et du tablier (16).

8. Agencement selon l'une quelconque des revendications précédentes, caractérisé en ce que le berceau (22) forme un support pour un équipement agencé dans la partie avant du véhicule, notamment un ensemble (42) de crémaillère de direction.

## Claims

1. Arrangement of a front wheel and axle set on a vehicle body, said body comprising a substructure defined by a floor (12) in which there is arranged a substantially longitudinal tunnel (18) open towards the foot, equipped with an end opening at the front of the floor between two shafts (14) extending the floor (12), the arrangement being of the type in which each wheel (R) of the set is connected, by means of an articulating arm (20) which is substantially transverse with respect to the longitudinal direction of the vehicle, to a corresponding end of a cradle (22) fixed on the substructure, characterised in that the cradle (22) comprises a central portion (22C) transverse with respect to the longitudinal direction of the vehicle, fixed on the floor (12) so as to form a bridge enclosing the contour of the open end (18A) of the tunnel, and two terminal portions (22E) inclined in a manner diverging towards the front of the vehicle, and fixed on the shafts (14).

2. Arrangement according to claim 1, characterised in that the cradle (22) has the general shape of a flattened box and comprises an elongate body (34) with a cross-section in the general shape of a 'U', the open end of which is closed by a plate forming a sole plate (36), so that the joining edges of the body (34) and of the sole plate (36) project perpendicularly to the wings of the body (34).

3. Arrangement according to claim 1 or 2, characterised in that the articulating arms (20) are connected to the ends of the cradle (22) by cap-type assemblies.

4. Arrangement according to claims 2 and 3 taken together, characterised in that the cap-type assemblies form a substantially vertical axes of articulation, and in that the wings of the caps are defined by a projecting edge (38) of the sole plate and by fork joints (40) fixed on the ends of the core of the body (34) of the cradle.

5. Arrangement according to any one of the preceding claims, characterised in that the cradle (22) extends substantially parallel to a horizontal plane.

6. Arrangement according to claim 5, characterised in that the front ends (14A) of the shafts are elevated with respect to the floor (12), and in that the terminal portions (22E) of the cradle are connected to the front ends (14A) of the shafts through the intermediary of vertical bracing members (30) extending between the shafts and a substantially horizontal plane (J) joining the central portion (22C) of the cradle with the substructure.

7. Arrangement according to any one of the preceding claims, characterised in that the tunnel (18) opens into a front compartment (15) of the vehicle through a bulkhead (16) separating this compartment from the passenger compartment (17) of the vehicle, and in that the central portion (22C) of the cradle is fixed on the floor (12) through the intermediary of two transverse bracing members (27) in the general shape of boxes, extending on either side of the tunnel between the latter and the shafts (14) and substantially in the extension of the floor (12) and of the bulkhead (16).

8. Arrangement according to any one of the preceding claims, characterised in that the cradle (22) forms a support for an assembly arranged in the forward portion of the vehicle, particularly a steering rack assembly (42).

## Patentansprüche

1. Anordnung eines vorderen Fahrgestells an einer Fahrzeugkarosserie, die einen Unterbau aufweist, der von einem Boden (12) gebildet ist, in dem ein im wesentlichen längs verlaufender, nach unten offener Tunnel (18) vorgesehen ist, der ein Ende besitzt, das im vorderen Bereich des Bodens zwischen zwei eine Verlängerung des Bodens (12) bildenden Längsträgern (14) ausmündet, wobei die Anordnung von einem Typ ist, bei welchem jedes Rad (R) des Fahrgestells durch einen im wesentlichen quer zur Längsrichtung des Fahrzeugs angeordneten Gelenkarm (20) mit einem entsprechenden Ende eines am Unterbau befestigten Tragrahmens (22) verbunden ist, dadurch gekennzeichnet, daß der Tragrahmen (22) einen quer zur Längsrichtung des Fahrzeugs angeordneten mittleren Teil (22C) aufweist, der an dem Boden (12) so befestigt ist, daß eine Brücke gebildet wird, die den Umriß des ausmündenden Endes (18A) des Tunnels schließt, sowie zwei Endteile (22E), die auf die Fahrzeugfront zu divergierend schräg verlaufen und an den Längsträgern (14) befestigt sind.

2. Anordnung nach Anspruch 1, dadurch gekennzeichnet, daß der Tragrahmen (22) die allgemeine Form eines flachen Kastens hat und einen langgestreckten Körper (34) mit allgemein U-förmigem Querschnitt besitzt, dessen offene Seite durch eine eine Sohle bildende Platte (36) so geschlossen ist, daß die Verbindungsränder des Körpers (34) und der Sohle (36) senkrecht zu den Seitenwänden des Körpers (34) vorstehen.

3. Anordnung nach Anspruch 1 oder 2, dadurch gekennzeichnet, daß die Gelenkarme (20) mit den Enden des Tragrahmens (22) durch Montagegabeln verbunden sind.

4. Anordnung nach den Ansprüchen 2 und 3 zusammen, dadurch gekennzeichnet, daß die Montagegabeln im wesentlichen senkrechte Gelenkachsen definieren und daß die Schenkel der Gabeln von einem vorstehenden Rand (38) der Sohle und von Wangen (40) gebildet sind, die an den Enden des Verbindungsteils des Körpers (34) des Tragrahmens befestigt sind.

5. Anordnung nach einem der vorhergehenden Ansprüche, dadurch gekennzeichnet, daß der Tragrahmen (22) sich im wesentlichen parallel zu einer horizontalen Ebene erstreckt.

6. Anordnung nach Anspruch 5, dadurch gekennzeichnet, daß die vorderen Enden (14A) der Längsträger höher als der Boden (12) angeordnet sind und daß die Endteile (22E) des Tragrahmens mit den vorderen Enden (14A) der Längsträger über vertikale Verstrebungsorgane (30) verbunden sind, die sich zwischen den Längsträgern und einer im wesentlichen horizontalen Verbindungsebene (J) zwischen dem mittleren Teil (22C) des Tragrahmens und dem Unterbau erstrecken.

7. Anordnung nach einem der vorhergehenden Ansprüche, dadurch gekennzeichnet, daß der Tunnel (18) über eine ein Frontabteil (15) des Fahrzeugs vom Insassenraum (17) trennende Wand in dieses Frontabteil mündet und daß der mittlere Teil (22C) des Tragrahmens am Boden (12) über zwei allgemein kastenförmige Querverstrebungsorgane (27) befestigt ist, die sich zu beiden Seiten des Tunnels zwischen diesem und den Längsträgern (14) und im wesentlichen in der Verlängerung des Bodens (12) und der Wand (16) erstrecken.

8. Anordnung nach einem der vorhergehenden Ansprüche, dadurch gekennzeichnet, daß der Tragrahmen (22) einen Träger für eine im Frontteil des Fahrzeugs angeordnete Einrichtung, insbesondere eine Lenkzahnstangeneinheit (42), bildet.
